# EUROPÄISCHE PATENTANMELDUNG

(11) **EP 0 636 508 A2**
(43) Veröffentlichungstag der Anmeldung: **01.02.1995**
(21) Anmeldenummer: 94111213.8
(22) Anmeldetag: 19.07.1994
(51) Int. Cl.: B60K 37/00, B60R 11/02, B60R 25/04, B60R 25/10

(54) **Bedien- und/oder Anzeigeteil zum Betreiben zumindest einer Sicherheitsvorrichtung und einer Autotelefonanlage**

(30) Priorität: 29.07.1993 DE 4325534
(71) Anmelder: SIDLER GMBH & CO, D-72077 Tübingen (DE)
(72) Erfinder: Hornung, Siegfried, Dipl.-Ing., D-72770 Reutlingen (DE); Zeeb, Gerhard, Dipl.-Ing., D-72138 Kirchentellinsfurt (DE)
(74) Vertreter: KOHLER SCHMID + PARTNER

(57) **Zusammenfassung**

Ein Bedien- und/oder Anzeigeteil 17 ist in einem Ascher 18 angeordnet, damit bei geöffnetem Ascher 18 über den Bedien- und/oder Anzeigeteil 17 eine oder mehrere Sicherheitsvorrichtungen und eine Autotelefonanlage in einem Kraftfahrzeug betrieben werden können. Ist der Bedien- und/oder Anzeigeteil 17 in dem Ascher 18 angeordnet, so ist bei verschlossenem Ascher 18 der Bedien- und/oder Anzeigeteil 17 nicht von außen sichtbar. Über die Kombination des Bedien- und/oder Anzeigeteils 17 mit einer oder mehreren Sicherheitsvorrichtungen und einer Autotelefonanlage ist es möglich, daß bei einer Fehlbedienung der Sicherheitsvorrichtungen über die Autotelefonanlage selbsttätig Signale an beliebige stationäre Telefonanlagen abgegeben werden können.

## Beschreibung

Die Erfindung geht aus von einer Anordnung mindestens einer Steuer-, Meß- oder Sicherheitsvorrichtung für Kraftfahrzeuge, insbesondere für den nachträglichen oder zusätzlichen Einbau, mit einem im Ascher des Fahrgastraums vorgesehenen Bedien- und/oder Anzeigeteil zum Betreiben der mindestens einen Sicherheitsvorrichtung.

Eine derartige Anordnung ist durch das Deutsche Patent DE 29 30 832 C 2 bekanntgeworden.

Derartige zusätzliche Vorrichtungen sind in unterschiedlicher Art und für die verschiedensten Zwecke handelsüblich. Problematisch ist dabei stets die Unterbringung oder Anbringung des Bedien- oder Anzeigeteiles, die ohne Beschädigungen ohne Änderungen der Armaturentafel und ohne Beeinträchtigung der inneren Sicherheit des Fahrzeuges erfolgen sollten. Trotzdem müssen sich derartige Vorrichtungen in Reich- oder Sichtweite des Fahrers und, bevorzugt, auch noch des Beifahrers befinden. Auch Vorrichtungen, die nur gelegentlich benutzt oder abgelesen werden, müssen dennoch bei Bedarf und auch bei Fahrt des Kraftfahrzeugs leicht zugänglich bzw. sichtbar sein. Bei der aus DE 29 30 832 C 2 bekannten Vorrichtung ist der Bedien- und/oder Anzeigeteil im Ascher eines Kraftfahrzeugs untergebracht, und somit ist das Bedien- und/oder Anzeigeteil sowohl für den Fahrer wie auch den Beifahrer leicht zugänglich zu erreichen. Mit dem bekannten Bedien- und/oder Anzeigeteil ist eine Sicherheitsvorrichtung betreibbar, die es erlaubt, die Zündung bzw. die Lenkung eines Kraftfahrzeugs über ein elektronisches Zahlenkombinationsschloß zu sperren.

Aufgabe der vorliegenden Erfindung ist es, eine Vorrichtung zu schaffen, die eine benutzerfreundliche Handhabung des Bedienteils gewährleistet und bei der eine Sicherheitsvorrichtung mit dem Bedien- und/oder Anzeigeteil verbunden ist.

Diese Aufgabe wird erfindungsgemäß dadurch gelöst, daß der Bedien- und/oder Anzeigeteil im Ascher ein- und ausschwenkbar angeordnet ist und eine Tastatur für ein Autotelefon umfaßt, das über die Tastatur betreibbar ist, und daß im Bedien- und/oder Anzeigeteil oder in den übrigen Vorrichtungen, mit denen der Bedien- und/oder Anzeigeteil verbunden ist, Mittel vorgesehen sind, die bei unsachgemäßer Handhabung des Bedien- und/oder Anzeigeteils selbsttätig ein Signal auslösen.

Das erfindungsgemäße Bedien- und/oder Anzeigeteil hat damit den Vorteil, daß mit der Codierung einer Diebstahlsicherungsanlage auch das Autotelefon gesichert werden kann. Durch die Kombination von Diebstahlsicherungsanlagen bzw. Sicherheitsvorrichtungen allgemein kann in Verbindung mit dem Autotelefon eine neue Generation von Sicherheitsvorrichtungen geschaffen werden. Über eine Fehlbedienung der Diebstahlsicherungsanlage bzw. der Sicherheitsvorrichtungen kann ein Autotelefon selbststätig aktiviert werden, und das Autotelefon kann eine vorgegebene Information selbsttätig an eine stationär installierte Telefonanlage, beispielsweise bei der Polizei, oder bei privaten Sicherungsdiensten, übermitteln. Auf ein Speichermittel kann beispielsweise beim Verlassen des Kraftfahrzeugs noch der Standort gesprochen werden und bei einer Fehlbedienung, einer mehrfachen Fehlbedienung oder keiner Bedienung des Bedien- und/oder Anzeigeteils bzw. der Sicherheitsvorrichtungen wird dieser vorher eingegebene Standort der Polizei oder einer beliebigen mit dem Autotelefon anwählbaren Telefonstation mitgeteilt, sofern das mit diesen Mitteln ausgerüstete Kraftfahrzeug unbefugt bewegt wird.

Empfängt beispielsweise der Fahrzeugbesitzer eine derartige Information von seinem Autotelefon, so weiß er, daß unbefugte Personen sich unsachgemäß am Bedien- und/oder Anzeigeteil oder an den Sicherheitsvorrichtungen zu schaffen machen, oder daß ohne eine Freigabecodierung versucht wird, das Kraftfahrzeug zu starten.

Mit dem erfindungsgemäßen Bedien- und/oder Anzeigeteil ist es aber auch möglich, eine Autotelefonanlage in allen Funktionen zu betreiben, indem man beispielsweise den Wählvorgang mit diesem Bedien- und/oder Anzeigeteil einleitet oder gespeicherte Telefonnummern gezielt für eine gewünschte Sprechverbindung aktiviert. Auch Wahlwiederholungen und ein zeitversetztes Anwählen von Telefonnummern können mit dem erfindungsgemäßen Bedien- und/oder Anzeigeteil vorgenommen werden.

Die Anordnung des Bedien- und/oder Anzeigeteils in einem Ascher hat den Vorteil, daß der erfindungsgemäße Bedien- und/oder Anzeigeteil bei verschlossenem Ascher von außen nicht einsehbar ist. Wünscht der Fahrer bzw. der Beifahrer den Bedienund/oder Anzeigeteil zu bedienen, so ist es stets in seiner Griffweite plaziert. Ist der Bedien- und/oder Anzeigeteil im Ascher untergebracht, so muß kein neuer Aufbewahrungsraum für dieses Bedien- und/oder Anzeigeteil geschaffen werden.

Desweiteren sind im Bedien- und/oder Anzeigeteil oder in den übrigen Vorrichtungen, mit denen der Bedien- und/oder Anzeigeteil verbunden ist, Mittel vorgesehen, die bei unsachgemäßer Handhabung des Bedienund/oder Anzeigeteils selbsttätig ein Signal auslösen. Dabei kann es sich um ein akustisches Signal handeln oder aber auch um Signale, die der Bediener des Bedien- und/oder Anzeigeteils unmittelbar nicht wahrnehmen kann. Über derartige Signale kann beispielsweise der Kraftfahrzeuganlasser bzw. die Kraftfahrzeugzündung kurzgeschlossen werden. Auch ist es möglich, daß über ein derartiges Signal die Lenkung verriegelt wird, bis dann über eine Freigabecodierung diese Blockierungen wieder aufgehoben werden.

In einer bevorzugten Ausführungsform ist der Bedien- und/oder Anzeigeteil in einem Ascher selbsttätig ein- und ausschwenkbar angeordnet.

Bei einer anderen Ausführungsform ist der Bedien- und/oder Anzeigeteil leicht lösbar befestigt und als Einheit ab- oder entnehmbar.

Beide Ausführungsformen haben den Vorteil, daß das Bedien- und/oder Anzeigeteil im Fahrgastraum herumgereicht werden kann, und, ist es im Ascher selbst angeordnet, so hat die einfache und leichte Entnehmbarkeit des Bedien- und/oder Anzeigeteils den Vorteil, daß der Ascher auch mit wenigen einfachen Handgriffen aus seiner Positionierung herausnehmbar ist. Ist der Bedienund/oder Anzeigeteil im Ascher ein- und ausschwenkbar angeordnet, so muß nur der Ascher geöffnet werden, und der Bedien- und/oder Anzeigeteil schwenkt aus dem Ascher aus, so daß danach mit dem Bedien- und/oder Anzeigeteil gearbeitet werden kann. Schiebt man den Ascher in seine Schließstellung, so schwenkt der Bedien- und/oder Anzeigeteil selbsttätig in den Ascher ein, und der Bedienteil verschwindet in dem dafür vorgesehenen Hohlraum in der Armaturentafel.

Bei einer weiteren Ausgestaltung der Erfindung ist der Bedien- und/oder Anzeigeteil nach einer Freigabecodierung durch eine leicht lösbare Kupplung mit den zu dem übrigen Teil der Vorrichtung führenden Leitungen verbunden.

Dies hat den Vorteil, daß ein fest im Ascher installiertes Bedien- und/oder Anzeigeteil auch ohne komplizierte Vorarbeiten und ohne Abgabe eines Fehlsignals aus dem Ascher herausgenommen werden kann. Zuerst muß jedoch die Freigabecodierung erfolgen, indem man beispielsweise eine mehrstellige Zahlen- oder Buchstabenkombination im Bedien- und/oder Anzeigeteil aktiviert. Erst dann kann der Bedien- und/oder Anzeigeteil ohne Abgabe eines Signals aus dem Ascher entnommen werden.

In weiterer Ausgestaltung der Erfindung ist der Bedien- und/oder Anzeigeteil im Ascher vertieft angeordnet und durch eine Öffnung hindurch sichtbar bzw. zur Betätigung zugänglich. Dies hat den Vorteil, daß der Bedien- und/oder Anzeigeteil auch dann betätigbar ist, wenn er in der geöffneten Stellung des Aschers in der Ascherschublade vollkommen verbleibt.

In weiterer Ausgestaltung der Erfindung ist der Bedien- und/oder Anzeigeteil mit bei geöffnetem Ascher von oben zugänglicher Bedienseite bzw. von oben sichtbarer Anzeigeseite angeordnet. Dies hat den Vorteil, daß das Bedien- und/oder Anzeigeteil einfach handhabbar ist, und dennoch ist es geschützt in der Ascherschublade gelagert.

Bei einer weiteren Ausgestaltung der Erfindung weist die Sicherheitsvorrichtung ein elektronisches Zahlenkombinationsschloß zum Sperren von einem Kraftfahrzeuganlasser und/oder einer Zündung und/oder einer Lenkung und eines Autotelefons auf, und der Bedien- und/oder Anzeigeteil ist mit einem Tastenfeld versehen, über das eine Eingabe eines Zifferncodes ermöglicht wird und ein Autotelefon betreibbar ist. Die Tasten können dabei eine Mehrfachbelegung aufweisen oder die Tasten sind für die oder mehrere Sicherheitsvorrichtungen getrennt, beispielsweise durch eine andere Kontur oder eine andere Farbe auf dem Bedien- und/oder Anzeigeteil angeordnet. Das Bedien- und/oder Anzeigeteil kann ein oder mehrere Displays für die Wiedergabe von Informationen für den Betreiber der oder mehrerer Sicherheitsvorrichtungen bzw. des Autotelefons aufweisen.

Ist der Bedien- und/oder Anzeigeteil in einem durch eine Wand abgetrennten Abteil des Aschers vorgesehen, so ist gewährleistet, daß das Bedien- und/oder Anzeigeteil nicht unzulässig verschmutzt wird.

Bei einer weiteren Ausgestaltung der Erfindung ist über den Bedien- und/oder Anzeigeteil eine Freisprechanlage eines Autotelefons aktivierbar. Wird über den Bedien- und/oder Anzeigeteil eine Freisprechanlage aktiviert, so kann der Fahrer auch während der Autofahrt ein Telefongespräch führen.

In weiterer Ausgestaltung der Erfindung ist über den Bedien- und/oder Anzeigeteil eine Sprechverbindung zu einem oder mehreren im Kraftfahrzeuginnenraum beliebig plazierbaren Telefonhörern herstellbar. Sind derartige Verbindungen vorgesehen, so kann entweder die Freisprechanlage oder das Sprechen über einen Telefonhörer aktiviert werden. Auch kann der Telefonhörer in Verbindung mit dem erfindungsgemäßen Bedien- und/oder Anzeigeteil sehr klein und kompakt gehalten werden, weil der Telefonhörer selbst keine elektronischen Mittel zum Betreiben der Autotelefonanlage aufweisen muß. Über den Bedien- und/oder Anzeigeteil kann auch eine Sprechverbindung mit einem im Fond eines Kraftfahrzeugs plazierten Telefonhörer aufgebaut werden.

Zusätzlich kann der Bedien- und/oder Anzeigeteil über eine Fernbedienung zumindest teilweise betrieben werden. Dies hat den Vorteil, daß beispielsweise schon von außerhalb eine oder mehrere Sicherheitsvorrichtungen, die im Kraftfahrzeug installiert sind, aktiviert oder ausgeschaltet werden können. So können beispielsweise nach dem Verlassen des Kraftfahrzeugs über die Fernbedienung noch die Zentralverriegelung und/oder Bewegungserschütterungsmelder dem Bedienund/oder Anzeigeteil zugeschaltet werden, damit auch derartige Hörungen über das Autotelefon meldbar sind. Wird ein Kraftfahrzeug mit den hier beschriebenen Mitteln umfangreich gesichert, so kann ein derartig gesichertes Kraftfahrzeug nicht ohne Signalgebung unsachgemäß bewegt oder behandelt werden.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen näher erläutert.

Es zeigt:
- Fig. 1: ein erfindungsgemäßes Bedien- und/oder Anzeigeteil mit einem den Bedien- und/oder Anzeigeteil umgebenden Ascher;
- Fig. 2: ein weiteres Ausführungsbeispiel eines erfindungsgemäßen Bedien- und/oder Anzeigeteils im ausgeschwenkten Zustand eines Aschers.

Die einzelnen Figuren der Zeichnung zeigen den erfindungsgemäßen Gegenstand teilweise stark schematisiert und sind nicht maßstäblich zu verstehen. Die Gegenstände der einzelnen Figuren sind so gezeigt, daß ihr Aufbau gut gezeigt werden kann.

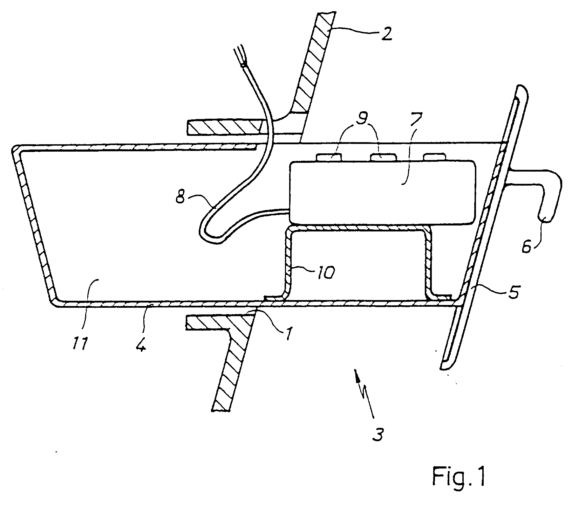

Figur 1 zeigt eine Aussparung 1 mit einer nur teilweise dargestellten Armaturentafel 2, in der ein Ascher 3 einschiebund ausziehbar geführt gehalten ist. Der Ascher 3 umfaßt eine Ascherschublade 4 und eine an deren Frontseite befestigte, abgerundete und gepolsterte Abdeckplatte 5 mit einem daran angeformten Griffstück 6. Der Ascher 3 ist in die Aussparung 1 soweit einschiebbar, bis die Abdeckplatte 5 mit ihrem Rand an der Oberfläche der Armaturentafel 2 die Aussparung 1 überdeckend anliegt. In der ausgezogenen Lage, wie sie in der Zeichnung dargestellt ist, ist der Ascher 3 durch einen Anschlag fixiert, der nicht mehr dargestellt ist, weil er sich nicht von seither üblichen Anschlägen und Fixierungen unterscheidet. Aus dieser Lage ist der Ascher 3 durch Ausrücken des federnden Anschlages entnehmbar, nachdem entweder der Bedien- und/oder Anzeigeteil unter Beibehaltung einer elektrischen Verbindung mit einer oder mehreren Sicherheitsvorrich
tungen und einer Autotelefonanlage aus dem Ascher entnommen worden ist, oder der Bedien- und/oder Anzeigeteil kann von seiner elektrischen Verbindung zu den
Sicherheitsvorrichtungen
bzw. zu dem Autotelefon dann abgekoppelt werden, wenn zuvor eine Freicodierung erfolgt ist, d. h., über die Eingabe eines Zahlen- oder Buchstabencodes kann erreicht werden, daß ohne
Signalabgabe das Bedien- und/oder Anzeigeteil von der oder den eigent
lichen Sicherheitsvorrichtungen bzw. dem Autotelefon entkoppelt werden kann.

In der Ascherschublade 4 ist, an die Abdeckplatte 5 angrenzend, ein Bedienteil 7 einer oder mehrerer Sicherheitsvorrichtungen untergebracht, die ein mit dem Bedienteil 7 über ein Kabel 8 verbundenes, in der Zeichnung nicht dargestelltes Steuerteil umfasst, das beispielsweise im Motorraum oder im Kofferraum des Kraftfahrzeuges untergebracht sein kann und das beispielsweise eine Kurzschlußstrecke für den Kraftfahrzeuganlasser oder den Unterbrecher der Zündanlage enthält. Das Bedienteil 7 weist an seiner Oberseite ein Tastenfeld mit Tasten 9 auf, die nach einer Betätigung in vorgeschriebener Reihenfolge die Kurzschlußstrecke öffnen und die Telefonberechtigung mit der daran angekoppelten Autotelefonanlage herstellen. Über den Bedienteil 7 kann die Funktion des Kraftfahrzeugsanlassers, der Zündung oder der Lenkung freigegeben werden. Zum Einrücken der Sicherheitsvorrichtung, also zum Kurzschließen der Unterbrecherstrecke, genügt es, eine einzige Taste zu betätigen, deren Wirkung erst wieder durch die Betätigung verschiedener Tasten in vorgeschriebener Reihenfolge aufgehoben werden kann.

Der Bedienteil 7 ist bei der dargestellten Ausführungsform auf einer Konsole 10 angebracht, die ihrerseits am Boden der Ascherschublade 4 befestigt ist. Dabei ist das Bedienteil 7 durch nicht dargestellte Verrastungen lösbar gehalten. Anstelle dieser lösbaren Halterung durch Rastmittel oder Klammern könnte das Bedienteil 7 auch unlösbar an der Konsole 10 befestigt sein, beispielsweise durch Festkleben. In diesem Fall ist dann das Kabel 8 mit einer Steckverbindung versehen, deren einer Teil am Ende des Kabels 8 und deren anderer Teil in einer Aussparung der Wand des Bedienteiles 7 angeordnet ist.

Die Konsole 10 kann gleichzeitig noch eine seitliche Wand bilden, die den Bedienteil 7 zum rückwärtigen, der Abdeckplatte 5 abgewandten Seite der Ascherschublade 4 abtrennt. Eine seitliche Abtrennung ist dadurch geschaffen, daß der Bedienteil 7 unmittelbar angrenzend an eine zum Boden der Ascherschublade 4 und zur Abdeckplatte 5 senkrechte Seitenwand 11 angrenzend angeordnet ist und an der Konsole 10 eine zur Seitenwand 11 parallele Trennwand an die andere Seite des Bedienteiles 7 angrenzend vorgesehen ist.

Ein wesentlicher Vorteil, der durch die Erfindung erzielt wird, ist ferner noch darin zu sehen, daß bei einem Verkauf des Fahrzeuges das in den Ascher eingebaute Teil entfernt werden kann, ohne daß irgendwelche äußeren Spuren oder Beeinträchtigungen zurückbleiben. Das Kraftfahrzeug ist mit dem erfindungsgemäßen Bedien- und/oder Anzeigeteil, sofern es im Ascher selbst angeordnet ist, hinsichtlich des Aussehens seines Innenraumes und insbesondere der Armaturentafel völlig unverändert.

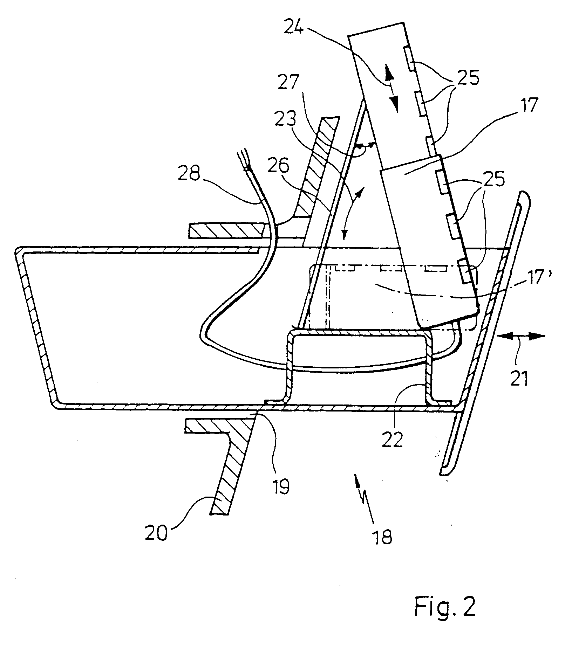

Figur 2 zeigt eine weitere Ausführungsform eines erfindungsgemäßen Bedien- und/oder Anzeigeteils 17, das in der Figur in einem Ascher 18 plaziert ist. Der Ascher 18 selbst ist in einer Aussparung 19 einer Armaturentafel 20 eines Kraftfahrzeuges vorgesehen. Die Armaturentafel 20 ist nur teilweise und stark schematisiert dargestellt. Der Ascher 18 kann in Pfeilrichtungen 21 verschoben werden. In der Figur 2 ist der Ascher 18 in der geöffneten Stellung gezeigt. Der Bedien- und/oder Anzeigeteil 17 ist auf einer Konsole 22 angeordnet. Der Bedien- und/oder Anzeigeteil ist gestrichelt mit dem Bezugszeichen 17' gezeigt, wie der Bedien- und/oder Anzeigeteil 17' bei verschlossenem Ascher 18 im Ascher 18 angeordnet ist. Wird der Ascher 18 wie in der Figur gezeigt geöffnet, so verschwenkt der Bedien- und/oder Anzeigeteil 17' in eine Lage mit dem Bezugszeichen 17. Der Bedien- und/oder Anzeigeteil 17 kann in Pfeilrichtungen 23 selbsttätig verschwenkt werden. Wird der Ascher 17 geschlossen, so schwenkt der Bedien- und/oder Anzeigeteil 17 selbsttätig in den Ascher 18 ein und nimmt eine Lage an, wie sie mit dem Bezugszeichen 17' gezeigt ist. Wird der Bedien- und/oder Anzeigeteil 17 in Pfeilrichtung 23 wie in der Figur 2 gezeigt verschwenkt, so fährt der Bedien- und/oder Anzeigeteil 17 in Pfeilrichtung 24 aus. Im ausgeschwenkten Zustand vergrößert sich der Bedien- und/oder Anzeigeteil 17, damit er besser handhabbar ist. Über Tasten 25, die alle vollkommen im ausgeschwenkten Zustand freigegeben sind, ist der Bedien- und/oder Anzeigeteil 17 handhabbar. Wie in der Figur 2 gezeigt, ist es möglich, daß auch im ausgeschwenkten Zustand bestimmte Tasten nicht einfach zugänglich sind, damit keine Fehlbedienungen, beispielsweise während einer Autofahrt, möglich sind.

Ist der Bedien- und/oder Anzeigeteil 17 ausgeschwenkt, so klappt selbsttätig eine Stütze 26 in Pfeilrichtung 27 aus, damit der Bedien- und/oder Anzeigeteil 17 gut und unverrückbar handhabbar ist. Beim Einschwenken des Bedien- und/oder Anzeigeteils 17 verkleinert sich der Bedien- und/oder Anzeigeteil 17 auf eine Größe, wie sie gestrichelt mit dem Bezugs- - zeichen 17' gezeigt ist, und die Stütze 26 klappt in den Bedien- und/oder Anzeigeteil 17 ein und verkürzt sich teleskopartig. Der Bedien- und/oder Anzeigeteil 17 ist über ein Kabel 25 mit einer oder mehreren nicht gezeigten Sicherheitsvorrichtungen und einer Autotelefonanlage verbunden.

Ein Bedien- und/oder Anzeigeteil 17 ist in einem Ascher 18 angeordnet, damit bei geöffnetem Ascher 18 über den Bedien- und/oder Anzeigeteil 17 eine oder mehrere Sicherheitsvorrichtungen und eine Autotelefonanlage in einem Kraftfahrzeug betrieben werden können. Ist der Bedien- und/oder Anzeigeteil 17 in dem Ascher 18 angeordnet, so ist bei verschlossenem Ascher 18 der Bedien- und/oder Anzeigeteil 17 nicht von außen sichtbar. Über die Kombination des Bedien- und/oder Anzeigeteils 17 mit einer oder mehreren Sicherheitsvorrichtungen und einer Autotelefonanlage ist es möglich, daß bei einer Fehlbedienung der Sicherheitsvorrichtungen über die Autotelefonanlage selbsttätig Signale an beliebige stationäre Telefonanlagen abgegeben werden können.

## Patentansprüche

1. Anordnung mindestens einer Steuer-, Meß- oder Sicherheitsvorrichtung für Kraftfahrzeuge, insbesondere für den nachträglichen oder zusätzlichen Einbau, mit einem im Ascher (3; 18) des Fahrgastraums vorgesehenen Bedien- und/oder Anzeigeteil (7; 17) zum Betreiben der mindestens einen Sicherheitsvorrichtung,
dadurch gekennzeichnet,
daß der Bedien- und/oder Anzeigeteil (7; 17) im Ascher (3; 18) ein- und ausschwenkbar angeordnet ist und eine Tastatur (9; 25) für ein Autotelefon umfaßt, das über die Tastatur (9; 25) betreibbar ist, und daß im Bedien- und/oder Anzeigeteil (7; 17) oder in den übrigen Vorrichtungen, mit denen der Bedien- und/oder Anzeigeteil (7; 17) verbunden ist, Mittel vorgesehen sind, die bei unsachgemäßer Handhabung des Bedien- und/oder Anzeigeteils (7; 17) selbsttätig ein Signal auslösen.

2. Anordnung nach Anspruch 1, dadurch gekennzeichnet, daß der Bedien- und/oder Anzeigeteil (7; 17)
selbsttätig ein- und ausschwenkt.

3. Anordnung nach Anspruch 1 oder 2, dadurch gekennzeichnet, daß der Bedien- und/oder Anzeigeteil (7; 17) leicht lösbar befestigt und als Einheit ab- oder entnehmbar ist.

4. Anordnung nach einem der Ansprüche 1 bis 3, dadurch gekennzeichnet, daß der Bedien- und/oder Anzeigeteil (7; 17) nach einer Freigabecodierung durch eine leicht lösbare Kupplung mit den zu den übrigen Teilen der Vorrichtungen führenden Leitungen (8; 28) verbunden ist.

5. Anordnung nach einem der vorhergehenden Ansprüche, dadurch gekennzeichnet, daß der Bedien- und/oder Anzeigeteil (7; 17) im Ascher (3; 18) vertieft angeordnet und durch eine Öffnung hindurch sichtbar bzw. zur Betätigung zugänglich ist.

6. Anordnung nach einem der vorhergehenden Ansprüche, dadurch gekennzeichnet, daß der Bedien- und/oder Anzeigeteil (7; 17) mit bei geöffnetem Ascher (3; 18) von oben zugänglicher Bedienseite bzw. von oben sichtbarer Anzeigeseite angeordnet ist.

7. Anordnung nach einem der vorhergehenden Ansprüche, dadurch gekennzeichnet, daß die Sicherheitsvorrichtung ein elektronisches Zahlenkombinationsschloß zum Sperren von einem Kraftfahrzeuganlasser und/oder einer Zündung und/oder einer Lenkung und eines Autotelefons ist und daß der Bedien- und/oder Anzeigeteil (7; 17) ein Tastenfeld (9; 25) zur Eingabe eines Zifferncodes und aller Funktionen für ein Autotelefon aufweist.

8. Anordnung nach einem der vorhergehenden Ansprüche, dadurch gekennzeichnet, daß der Bedien- und/oder Anzeigeteil (7; 17) in einem durch eine Wand abgetrennten Abteil des Aschers (3; 18) vorgesehen ist.

9. Anordnung nach einem der vorhergehenden Ansprüche, dadurch gekennzeichnet, daß über den Bedien- und/oder Anzeigeteil (7; 17) eine Freisprechanlage eines Autotelefons aktivierbar ist.

10. Anordnung nach einem der Ansprüche 1 bis 8, dadurch gekennzeichnet, daß über den Bedien- und/oder Anzeigeteil (7; 17) eine Sprechverbindung zu einem oder mehreren im Kraftfahrzeuginnenraum beliebig plazierbaren Telefonhörern herstellbar ist.

11. Anordnung nach einem der vorhergehenden Ansprüche, dadurch gekennzeichnet, daß der Bedien- und/oder Anzeigeteil (7; 17) über eine Fernbedienung zumindest teilweise betreibbar ist.
